**Europäisches Patentamt**

**European Patent Office**

**Office européen des brevets**

(19)

(11) Veröffentlichungsnummer: **0 050 096**

**A1**

(12) # EUROPÄISCHE PATENTANMELDUNG

(21) Anmeldenummer: **81810404.4**

(22) Anmeldetag: **08.10.81**

(51) Int. Cl.³: **C 09 J 5/06**
**C 09 J 7/02, B 32 B 15/08**
**B 32 B 7/12**

(30) Priorität: **14.10.80 CH 7652/80**

(43) Veröffentlichungstag der Anmeldung:
**21.04.82 Patentblatt 82/16**

(84) Benannte Vertragsstaaten:
**AT CH DE FR IT LI**

(71) Anmelder: **CIBA-GEIGY AG**
**Patentabteilung Postfach**
**CH-4002 Basel(CH)**

(72) Erfinder: **Windischbauer, Peter**
**Oswaldgasse 118 III/III/11**
**A-1120 Wien(AT)**

(72) Erfinder: **Huwyler, René, Dr.**
**Bärenfelsweg 5**
**CH-4147 Aesch(CH)**

(54) **Verfahren zum Verkleben von Gegenständen mit härtbaren Klebstoffen.**

(57) Verkleben von zwei Blechen (1 und 2) mittels härtbarem Klebstoff unter Zwischenlage einer dünnen thermoplastischen Folie (4). Der härtbare Klebstoff (3) wird entweder auf beide Bleche (1,2) oder beidseitig auf die Folie (4) aufgebracht und die Teile bei erhöhter Temperatur zusammengepresst. Vorzugsweise gelangen Expoxidharzklebstoffe und eine Folie von maximal 0,1 mm Dicke aus Acrylatcopolymer zur Anwendung. Die Aushärtung während des Zusammenpressens erfolgt bei einer Temperatur, bei welcher die Folie aufschmilzt, wodurch eine homogene, quasi verschmolzene Klebfuge entsteht.

**Fig. 1**

EP 0 050 096 A1

Croydon Printing Company Ltd.

- 1 -

CIBA-GEIGY AG                                    37-13100/+

Basel (Schweiz)


Verfahren zum Verkleben von Gegenständen mit härtbaren Klebstoffen


Die Erfindung betrifft ein Verfahren zum Verkleben von Gegenständen mit härtenden Klebstoffen.


Klebeverbindungen zeigen üblicherweise relativ geringe Schälfestigkeitswerte, insbesondere dann, wenn keine diesbezüglich speziell formulierten Kleber eingesetzt werden.


Bei Klebeverbindungen, die auf Schälfestigkeit beansprucht werden, ist es bekanntgeworden, Gummifolien in die Klebefuge einzulegen und mitzuverkleben, wobei die Gummifolien durch Oberflächenätzung vorbehandelt werden müssen.


Zur Erhöhung der Schälfestigkeit von Verklebungen mit Araldit®-klebern ist auch vorgeschlagen worden, flüssige oder pulverförmige Zweikomponentenkleber mit Acrylatpulvern zu modifizieren. Die Acrylatpulver sind jedoch einerseits in den Kleberflüssigkeiten unlöslich, so dass kein homogener Kleberauftrag möglich ist. Sind andererseits die Korngrössen des eingesetzten Acrylatpulvers unter etwa 0,05 mm, was den für technische Verklebungen üblichen Klebfugenstärken entspricht, lässt sich keine ausreichende Schälfestigkeitserhöhung erzielen.


Es bestand somit die Aufgabe, ein Verklebungsverfahren zu entwickeln, mit dem unter Verwendung üblicher aushärtender fester oder flüssiger Harzkleber Klebeverbindungen hoher Schälfestigkeit erzielbar sind, welche die mit den bisherigen Vorschlägen verbundenen Nachteile aber nicht aufweisen.

Diese Aufgabe wird erfindungsgemäss vor allem dadurch gelöst, dass die Klebstoffe in Kombination mit einer beim Aushärten der Klebstoffe aufschmelzenden Folie eingesetzt werden.

Mit anderen Worten werden erfindungsgemäss härtbare Klebstoffe mit beim Aushärten der Klebstoffe aufschmelzenden Folien kombiniert, wobei die Anwendung einer Gummifolie zur Erhöhung der Schälfestigkeit entfällt und eine homogene Klebfuge erzielt wird.

Insbesondere kann die Schmelzfolie als Träger für die Klebstoffe dienen, d.h. beim erfindungsgemässen Verfahren können ein- oder beidseitig mit Klebstoff beschichtete Schmelzfolien eingesetzt werden bzw. wird die Schmelzfolie nach dem Aufbringen des Klebstoffs auf die zu verklebenden Gegenstände in die Klebfuge eingelegt.

Die Stärke und das Material der Schmelzfolie wird auf die eingesetzten Klebstoffe abgestimmt und zur Vermeidung eines plastischen Verhaltens der Klebfuge ausreichend dünn gewählt, nach einem weiteren Kennzeichen der Erfindung als gegebenenfalls perforierte Folie mit einer Stärke von höchstens 0,1 mm. Der Schmelzpunkt (oberes Ende des Schmelzbereiches) der Folie soll 200° nicht übersteigen und vorzugsweise im Bereich von etwa 60 bis 160 °C liegen. Je niedriger man den Schmelzpunkt der Folie wählt, desto unabhängiger ist man in der Wahl des Klebstoffes.

Das erfindungsgemässe Verfahren kommt für alle Fügeteilkombinationen in Frage, bei denen mit üblichen flüssigen oder festen Ein- oder Mehrkomponentenklebern, vorzugsweise Epoxid-, Acrylat- und Polyurethanharzen, schlag-, schäl- und/oder stossbelastete Klebefugen gebildet werden, wobei die Klebeverbindungen insbesondere hohe Schälfestigkeit aufweisen sollen.

Ein besonderes Anwendungsgebiet sind dabei sämtliche Verbundkonstruktionen, insbesondere Sandwichkonstruktionen wie Verbundplatten und Skier. Bevorzugtes Anwendungsgebiet sind Metallverbindungen.

Besonders günstige Ergebnisse werden mit Thermoplastfolien auf Acrylat- oder Acrylatcopolymerbasis in Kombination mit Epoxidharzklebstoffen erzielt.

Als Thermoplastfolien können weiterhin u.a. solche auf Basis von PVC sowie PVC-Copolymeren, Aethylvinylacetatcopolymeren, Polyvinylformal- sowie Polyvinylbutyralcopolymeren eingesetzt werden. Wesentlich ist, dass ihr Schmelzpunkt genügend tief ist, damit auch Klebstoffe mit niedrigeren Aushärtungstemperaturen eingesetzt werden können. Geeignete Folienwerkstoffe und Folien sind weiter unten in tabellarischer Form angegeben.

Im folgenden wird die Erfindung anhand von Beispielen näher erläutert, wobei Klebstoffe auf Epoxidharzbasis, Acrylatbasis und Polyurethanbasis in Kombination mit einer etwa 0,09 mm starken Folie aus einem handelsüblichen Acrylsäure/Acrylestercopolymerisat (LUPOLEN A 2910 MX, Handelsprodukt der Firma BASF) mit einem Schmelzbereich von 97-101°C zum Verkleben von nach dem Picklingverfahren vorher angeätzten Aluminiumschichten eingesetzt werden.

Zum Vergleich werden die Aluminiumschichten jeweils ohne Zwischenlage der Acrylatcopolymerfolie miteinander verklebt und die Schälfestigkeiten der Verklebungen bestimmt.

Die Dicke der einzelnen Klebstoffschichten nach dem Auftrag beträgt ca. 0.10 bis 0,15 mm.

Als Aluminiumschichten werden als Trägermaterial Alubleche mit einer Dicke von etwa 2,5 mm und als Schälmaterial Alubleche mit einer Dicke von etwa 0,6 mm gemäss DIN 53281 eingesetzt; die Schälprüfung erfolgt bei Raumtemperatur als Rollenschälversuch nach DIN E 53289 auf einer elektronischen Prüfmaschine (Tinius Ohlsen ELECTROMATIC). Als Ergebnis wird das arithmische Mittel aus drei Versuchswerten angeführt; die für verschiedene Klebstoffe erhaltenen Ergebnisse sind den nachstehenden Tabellen zu entnehmen.

Beispiele 1-8: Der Klebstoff wird auf die Aluminiumschichten aufgebracht und diese einmal mit und einmal ohne (Vergleichsversuch) Zwischenlage der Thermoplastfolie mit einem Druck von ca. 5-7 kg/cm$^2$ zusammengepresst.

| Beispiel Nr. | Klebstoffsystem | | Teile Harz | Teile Härter | Härtung Temp. (°C) | Zeit (min) | Schälfestigkeit DIN E 53289 ohne Folie | (N/mm) mit Folie |
|---|---|---|---|---|---|---|---|---|
| | Harz | Härter | | | | | | |
| 1 | 80 Gew.-Teile eines flüssigen Epoxidharzes, hergestellt aus Epichlorhydrin und Bisphenol A mit einem Epoxidäquivalent von 188 und 20 Gew.-Teile Dibutylphthalat | Triäthylentetramin | 100 | 10 | 130 | 15 | 0,94 | 4,86 |
| 2 | " | Reaktionsprodukt aus Triäthylentetramin und Propylenoxid | 100 | 20 | 130 | 15 | 0,75 | 6,40 |
| 3 | " | Reaktionsprodukt aus Fettsäuren und Polyaminen des Types Versamid 140 (Fa. Schering). | 100 | 50 | 130 | 15 | 2,79 | 5,36 |

| Bei-spiel Nr. | Klebstoffsystem | | Teile Harz | Teile Härter | Härtung | | Schälfestigkeit | |
|---|---|---|---|---|---|---|---|---|
| | Harz | Härter | | | Temp. (°C) | Zeit (min) | DIN E 53289 ohne Folie | (N/mm) mit Folie |
| 4 | 70 Gew.-Teile eines flüssigen Epoxidharzes, hergestellt aus Epichlorhydrin und Bisphenol- A mit einem Epoxidäquevalent von 188, 5 Gew.-Teile eines Adduktes, hergestellt aus flüssigem Bisphenol-A Epoxidharz und einem sauren Polyester aus Neopentylglykol und Adipinsäure, und 25 Gew.-Teile Lithopone RS (Fa.Sachtleben Chemie GmbH). | 80 Gew.-Teile Versamid 125 (Fa.Schering), einem Kondensationsprodukt aus Fettsäuren und Polyaminen, und 20 Gew.-Teile Dimethylaminopropylamin | 100 | 40 | 130 | 15 | 3,01 | 10,20 |
| 5 | Flüssiges Epoxidharz, hergestellt aus Epichlorhydrin und Bisphenol A mit einem Epoxidäquivalent von 188 | Hexahydrophthalsäureanhydrid mit Tris-(dimethylaminomethyl)-phenol als Beschleuniger | 100 | 100+1 | 130 | 120 | 2,60 | 6,20 |

| Beispiel Nr. | Klebstoffsystem | | Teile Harz | Teile Härter | Härtung | | Schälfestigkeit | |
|---|---|---|---|---|---|---|---|---|
| | Harz | Härter | | | Temp. (°C) | Zeit (min) | DIN E 53289 (N/mm) ohne Folie | mit Folie |
| 6 | Diphenylmethan 4,4'-di-isocyanat | 31 Gew.-Teile eines Isocyanatendständigen Präpolymeren, herge-stellt aus Diphenyl-methan 4,4'diisocyanat und einem bifunktio-nellen Polyetherpolyol (OH Zahl 216-248),2 Gew.-Teile ABS(Acryl-Butadien-Styrol Poly-mer) Pulver und 67 Gew.-Teile Kreidepulver | 30 | 100 | 130 | 15 | 3,70 | 9.00 |
| 7 | 47 Gew.-Teile Methylmetha-crylat, 8 Gew.-Teile Me-thacrylsäure, 12 Gew.-Teile Glycidylmethacrylat, 1 Gew.-Teil Aethylenglykol-dimethacrylat, 29 Gew.-Tei-le ABS (Acrylnitril-Buta-dien-Styrol Polymer)-Pulver 2 Gew.-Teile Chlorsulfophe-nylmaleinimid und 1 Gew.-Teil Cumolhydroperoxid | Vanax 808 (Dupont) | 100 | 5 | 130 | 15 | 1,80 | 3,60 |

- 7 -

| Beispiel Nr. | Klebstoffsystem | | Teile Harz | Teile Härter | Härtung | | Schälfestigkeit | (N/mm) |
| | Harz | Härter | | | Temp. (°C) | Zeit (min) | DIN E 53289 ohne Folie | mit Folie |
|---|---|---|---|---|---|---|---|---|
| 8 | Flüssiges Epoxidharz, hergestellt aus Epichlorhydrin und Bisphenol A mit einem Epoxidäquivalent von 188 | 4,4'Diaminodiphenylmethan | 100 | 27 | 160 | 120 | 0,60 | 6,47 |

0050096

Beispiel 9: Die Folie wird bei Raumtemperatur mit dem Klebstoff beschichtet und das Lösungsmittel bei 80°C während 15 Minuten ablüften gelassen. Die so hergestellte Klebbahn, welche über eine Lagerstabilität von mehreren Wochen bei Raumtemperatur verfügt, wird zwischen die Aluminiumschichten gelegt und diese mit einem Druck von ca. 5-7 kg/cm$^2$ verpresst. Im Vergleichsversuch wird der Klebstoff direkt auf die Aluminiumschichten appliziert und diese nach einer Ablüftzeit des Klebstoffes von 15 Minuten mit einem Druck von 5-6 kg/cm$^2$ zusammengepresst.

Beispiel 10: Die Folie wird mit dem auf ca. 80°C vorerhitzten Klebstoff beschichtet. Die so hergestellte Klebbahn, welche über eine Lagerstabilität von mehreren Wochen bei Raumtemperatur verfügt, wird zwischen die Aluminiumschichten gelegt und diese mit einem Druck von ca. 5-7 kg/cm$^2$ verpresst. Im Vergleichsversuch wird der Klebstoff direkt auf die ca. 80°C vorerhitzten Aluminiumschichten appliziert und diese mit einem Druck von 5-7 kg/cm$^2$ zusammengepresst.

| Beispiel Nr. | Einkomponentenklebstoff | Härtung | | Schälfestigkeit | |
|---|---|---|---|---|---|
| | | Temp. (°C) | Zeit (min) | DIN E 53289 ohne Folie | (N/mm) mit Folie |
| 9 | 77 Gew.-Teile bei Raumtemperatur festes Bisphenol-A-Epoxidharz mit einem Epoxidäquivalent von 440, 23 Gew.-Teile Methylglykol, 60 Gew. Teile Calciumsilikatpulver und 20 Gew.-Teile Aluminiumpulver DIN 100 zu einer Paste verrührt und mit einer Lösung aus 3,75 Gew.-Teilen Dicyandiamid und 26,25 Gew.-Teile Methylglykol vermischt. | 160 | 180 | 5,60 | 6,60 |
| 10 | 50 Gew.-Teile eines bei Raumtemperatur flüssigen Bisphenol-A Epoxidharzes mit einem Epoxidäquivalent von 188 und 25 Gew.-Teile eines festen Bisphenol-A Epoxidharzes mit einem Epoxidäquivalent von 1660 mit 4 Gew.-Teilen Dicyandiamid, 0,5 Gew. Teilen N-(3-Chlor-4-methylphenyl)N',N'-dimethyl-harnstoff und 10 Gew. Teilen Kreidemehl bei 60-70°C vermischt (Masse bei Raumtemperatur halbfest) | 180 | 20 | 4,50 | 5,50 |

0050096

Aus den Versuchswerten ergibt sich, dass die Schälfestigkeiten von Klebeverbindungen durch die erfindungsgemässe Verwendung einer Thermoplastfolie, die bei der Härtungstemperatur des Klebstoffsystems aufschmilzt (Schmelzfolie), wesentlich gesteigert werden können.

Das Klebfugenbild zeigt eine völlig homogene, quasi verschmolzene Klebefuge, wobei jedoch der mit der Verwendung von Schmelzklebefolien verbundene Nachteil von thermoplastischen Fliessvorgängen (Kriechen) unter Last nicht auftritt.

Anstelle der in den Beispielen verwendeten Folie aus LUPOLEN® A 2910 MX (BASF) können, wie bereits weiter oben erwähnt, selbstverständlich auch andere 0,05 bis 0,10 mm dicke Thermoplastfolien verwendet werden. In der folgenden Tabelle sind Polymere zur Herstellung solcher Folien und Folien unter Angabe des Markennamens, Herstellers und der Schmelztemperatur (oberes Ende des Schmelzbereichs) angeführt. Bei den in Klammer gesetzten Markennamen handelt es sich um solche Polymere, Granulate oder dgl., welche vom Hersteller ausdrücklich zur Herstellung von Folien empfohlen werden; bei allen anderen Markennamen um die Bezeichnung der Folien selbst.

|   | Polymer | Marke | Hersteller | Schmelztemperatur °C |
|---|---------|-------|------------|----------------------|
| 1 | Polyamid 11 | (Rilsan BMNO) | Organico | 186 |
| 2 | Polyamid 12 | (Vestamid 1901, 2101) | Hüls | 178 |
| 3 | Acetalcopolymerisat | (Hostaform 9010) | Hoechst | 167 |
| 4 | Celluloseacetat | (Cellidor) | Bayer | 195 |
| 5 | Celluloseacetat-butyrat | (Cellidor) | " | 175 |
| 6 | Polyamid-Copolymer | (Elvamide 806) | DuPont | 160 |
| 7 | Aethylen-Vinylacetat-Copolymer | (Coathylene 3547) 3733) | Plastlabor, Bulle CH | 92-95 |
| 8 | Aethylen-Acrylsäure-Acrylester-Terpolymer | (Coathylene 2957) | " " | 98-102 |
| 9 | Polymethylmethacrylat | (PMMA Korad) | Wolff-Walsrode, DE | 160/200 |
| 10 | Acrylnitril-Butadien-Styrol Terpolymer | (UGIKRAL) | Produits Chimiques Ugine Kuhlmann, FR | *) < 200 |
| 11 | Polyvinylchlorid | Gurit ⎰9600 ⎱ 9601 ⎰ 9604⎱ | Worbla, Bern, CH | *) < 200 |
| 12 | Polyvinylchlorid-Polyvinyl-acetat-Copolymer | " | " " | *) < 200 |
| 13 | Butadien-Styrol Copolymer | (K-Resin BDS) | Phillips Petroleum International | *) < 200 |
| 14 | Acrylonitril-Methylacrylat-Copolymer | **) | **) | *) ≪200 |

| Polymer | Marke | Hersteller | Schmelztemperatur °C |
|---|---|---|---|
| 15 Ethylcellulose | (Ethocel Std 10) | DuPont | *) < 200 |
| 16 LD Polyethylen | Lotrene FB 5005 | CdF-Chimie,FR | ca. 100-120 |
| 17 Polyamidkondensate | (Durethan KL 1-2104) | Bayer | 180 |
| 18 Polyvinylformal | (Formvar 15/95E) | Monsanto | 140 |
| 19 Polyvinylbutvor | (Butvar B 72A) | " | 145 |

*) Die genaue Schmelztemperatur ist den Erfindern nicht bekannt, liegt jedoch sicher unterhalb von 200°C.

**) Aus "Guide to plastics" 79, Mc Graw Hill New York, Seite 144, Hersteller/Handelsmarke nicht angegeben.

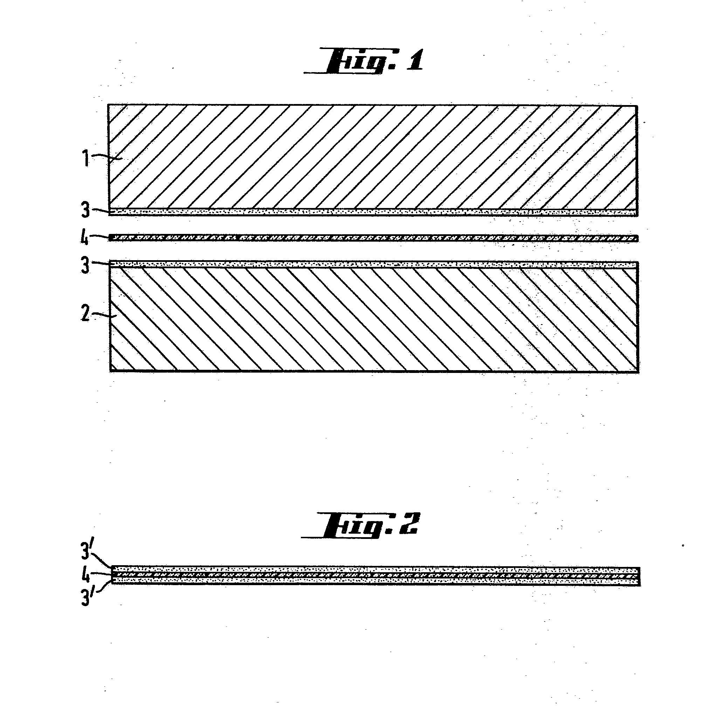

In Fig. 1 ist eine beispielsweise Anordnung zur Durchführung des erfindungsgemässen Verfahrens schematisch im Schnitt dargestellt. Zwei miteinander zu verklebende Metallplatten 1, 2 weisen jeweils einen Klebstoffauftrag 3 auf und zwischen den beiden Metallplatten, d.h. in der Klebfuge, ist eine Thermoplastfolie 4 vorgesehen. Die Metallplatten werden aneinandergelegt, wobei der Klebstoffauftrag 3 jeweils an der Thermoplastfolie 4 anliegt und der Klebstoff wird anschliessend wärmegehärtet, wobei die Thermoplastfolie aufschmilzt und eine homogene Verklebungszone erhalten wird, welche die Metallplatten 1, 2 verbindet.

In Fig. 2 ist eine Klebstoffbahn zur Durchführung des erfindungsgemässen Verfahrens im Schnitt dargestellt. Die Bahn besteht aus einer Thermoplastfolie 4, welche beidseitig mit je einer Einkomponenten-Klebstoffschicht 3' versehen ist, die bei Raumtemperatur mehrere Wochen lagerfähig ist. Die empfohlene Aushärtungstemperatur der Klebstoffschichten 3' liegt oberhalb des Schmelztemperaturbereiches der Folie 4 bzw. überlappt diesen oben. Die Klebstoffbahn 3'/4/3' wird zwischen zwei miteinander zu verklebende Teile (1, 2 Fig.1) eingeführt bzw. auf den unteren Teil gelegt und diese dann auf die Härtungstemperatur erhitzt und gleichzeitig zusammengepresst (geheizte Presse).

Zum Transport und zur Lagerung wird die Klebstoffbahn 3'/4/3' unter Zwischenlage eines handelsüblichen Trennpapiers zusammengerollt. Das Trennpapier ist erforderlich, weil die Klebstoffschichten 3' (Beispiele 9 und 10) klebrig sind. Das Trennpapier wird unmittelbar vor der Applikation abgezogen. Die Klebrigkeit der Klebstoffbahn erleichtert deren Fixierung auf einem der beiden miteinander zu verklebenden Teile. Zur Festigkeit der fertigen (gehärteten) Klebverbindung trägt die Klebrigkeit des (ungehärteten) Klebstoffs im wesentlichen nichts bei.

Patentansprüche

1. Verfahren zum Verkleben von Gegenständen, insbesondere Metallteilen, mit wärmehärtbaren Klebstoffen, dadurch gekennzeichnet, dass die Klebstoffe in Kombination mit einer beim Aushärten der Klebstoffe aufschmelzenden Folie eingesetzt werden und dass die Aushärtungstemperatur des Klebstoffes zumindest gleich hoch gewählt wird wie die Schmelztemperatur (oberes Ende des Schmelzbereichs) der Folie.

2. Verfahren nach Anspruch 1, dadurch gekennzeichnet, dass eine Folie eingesetzt wird, deren Schmelztemperatur höchstens 200°C beträgt.

3. Verfahren nach Anspruch 2, dadurch gekennzeichnet, dass eine Folie eingesetzt wird, deren Schmelztemperatur im Bereich von 60 bis 160°C liegt.

4. Verfahren nach einem der vorangehenden Ansprüche, dadurch gekennzeichnet, dass die Folie nach dem Klebstoffauftrag auf die zu verklebenden Gegenstände in die Trennfuge eingelegt wird.

5. Verfahren nach einem der vorangehenden Ansprüche, dadurch gekennzeichnet, dass eine mit wärmehärtbarem Klebstoff beschichtete Folie aus schmelzbarem Material eingesetzt wird.

6. Verfahren nach Anspruch 5, dadurch gekennzeichnet, dass eine mit lagerfähigem Klebstoff beschichtete Folie in die Klebefuge eingelegt wird.

7. Verfahren nach einem der vorangehenden Ansprüche, dadurch gekennzeichnet, dass eine Folie mit einer Dicke von höchstens 0,1 mm eingesetzt wird.

8. Verfahren nach einem der vorangehenden Ansprüche, dadurch gekennzeichnet, dass eine perforierte Folie eingesetzt wird.

9. Verfahren nach einem der Ansprüche 1 bis 7, dadurch gekennzeichnet, dass eine netzförmige Folie eingesetzt wird.

10. Verfahren nach einem der vorangehenden Ansprüche, dadurch gekennzeichnet, dass eine Acrylatcopolymerfolie zusammen mit Epoxidharzklebstoffen eingesetzt wird.

11. Verfahren nach einem der Ansprüche 1 bis 9, dadurch gekennzeichnet, dass eine Acrylatcopolymerfolie zusammen mit Klebstoffen auf Acrylatbasis eingesetzt wird.

12. Verfahren nach einem der Ansprüche 1 bis 9, dadurch gekennzeichnet, dass eine Acrylatcopolymerisatfolie zusammen mit Klebstoffen auf Polyurethanbasis eingesetzt wird.

13. Klebstoffbahn zur Durchführung des Verfahrens nach Anspruch 1, dadurch gekennzeichnet, dass sie aus einer schmelzbaren Folie besteht, die mindestens einseitig mit einem lagerfähigen wärmehärtbaren Einkomponentenklebstoff beschichtet ist, wobei der empfohlene Aushärtungstemperaturbereich des Klebstoffes höher liegt als die Schmelztemperatur (oberes Ende des Schmelzbereiches) des Folienmaterials.

14. Klebstoffbahn nach Anspruch 13, dadurch gekennzeichnet, dass die Schmelztemperatur (oberes Ende des Schmelzbereiches) der Folie bei maximal 200°C liegt.

15. Klebstoffbahn nach Anspruch 14, dadurch gekennzeichnet, dass die Schmelztemperatur der Folie im Bereich von 60 bis 160°C liegt.

16. Klebstoffbahn nach einem der Ansprüche 13 bis 15, dadurch gekennzeichnet, dass die Folie aus thermoplastischem Kunststoff besteht.

17. Klebstoffbahn nach einem der Ansprüche 13 bis 16, dadurch gekennzeichnet, dass die Folie eine Dicke von 0,05 bis 0,1 mm aufweist.

18. Klebstoffbahn nach einem der Ansprüche 13 bis 17, dadurch gekennzeichnet, dass die Klebstoffschicht eine Dicke von etwa 0,1 bis 0,2 mm aufweist.

19. Klebstoffbahn nach einem der Ansprüche 13 bis 18, dadurch gekennzeichnet, dass die Folie perforiert ist.

20. Klebstoffbahn nach einem der Ansprüche 13 bis 18, dadurch gekennzeichnet, dass die Folie netzförmig ist.

21. Klebstoffbahn nach einem der Ansprüche 13 bis 20, dadurch gekennzeichnet, dass die Folie aus Acrylatcopolymer besteht.

22. Klebstoffbahn nach einem der Ansprüche 13 bis 21, dadurch gekennzeichnet, dass die Klebstoffschicht aus Epoxidharzkunststoff besteht.

23. Klebstoffbahn nach einem der Ansprüche 13 bis 21, dadurch gekennzeichnet, dass die Klebstoffschicht aus einem Klebstoff auf Acrylatbasis besteht.

Fig. 1

Fig. 2

# EUROPÄISCHER RECHERCHENBERICHT

Europäisches
Patentamt

| EINSCHLÄGIGE DOKUMENTE | | | KLASSIFIKATION DER ANMELDUNG (Int Cl ¹) |
|---|---|---|---|
| Kategorie | Kennzeichnung des Dokuments mit Angabe, soweit erforderlich, der maßgeblichen Teile | betrifft Anspruch | |
| X | AT - B - 189 731 (CIBA) <br> * Gesamt * <br><br> -- | 1-7, 13-17 | C 09 J 5/06 <br> C 09 J 7/02 <br> B 32 B 15/08 |
| X | CH - A - 248 560 (AERO RESEARCH LIMITED) <br> * Gesamt * <br><br> -- | 1-7, 13-17 | B 32 B 7/12 |
| X | US - A - 3 703 434 (R.L. SCHAAF) <br> * Zusammenfassung; Spalte 2, Zeilen 5-13; Spalte 3, Zeilen 5-15, 49-71; Beispiele 1-19 * <br><br> ---- | 1-7, 13-18, 22 | |

**RECHERCHIERTE SACHGEBIETE (Int. Cl. ¹)**

C 09 J
C 08 J
B 32 B

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsatze
E: kollidierende Anmeldung
D: in der Anmeldung angeführtes Dokument
L: aus andern Grunden angefuhrtes Dokument
&: Mitglied der gleichen Patentfamilie, übereinstimmendes Dokument

| X | Der vorliegende Recherchenbericht wurde für alle Patentansprüche erstellt. |

| Recherchenort | Abschlußdatum der Recherche | Prüfer |
|---|---|---|
| WIEN | 27-11-1981 | KAHOVEC |

EPA form 1503.1  06.78